# EUROPÄISCHE PATENTSCHRIFT

(11) **EP 2 327 927 B1**
(45) Veröffentlichungstag und Bekanntmachung des Hinweises auf die Patenterteilung: **14.11.2012**
(21) Anmeldenummer: 10010673.1
(22) Anmeldetag: 25.09.2010
(51) Int. Cl.: F21V 5/04, F21V 7/00, G02B 17/08

(54) **Linsenelement für eine Lichtquelle u.a.**
Lens element for a light source etc.
Elément de lentille pour une source lumineuse entre autre

(30) Priorität: 19.11.2009 DE 102009053422
(43) Veröffentlichungstag der Anmeldung: 01.06.2011
(73) Patentinhaber: ERCO GmbH, 58507 Lüdenscheid (DE)
(72) Erfinder: Bremerich, Matthias, Dipl.-Phys. Dr. rer. nat., 58368 Lennestadt (DE)
(74) Vertreter: Roche, von Westernhagen & Ehresmann

(56) Entgegenhaltungen:
- EP-A1- 1 970 620
- EP-A2- 1 617 247
- DE-A1-102004 062 286

## Beschreibung

Die Erfindung betrifft zunächst ein Linsenelement für eine Lichtquelle gemäß dem Oberbegriff des Anspruches 1.

Herkömmliche Linsenelemente bestehen aus transparentem Kunststoff, beispielsweise aus PMMA, und ermöglichen eine Bündelung des von einer LED emittierten Lichtes, um eine eng abstrahlende Lichtverteilung zu erzielen. Derartige Lichtabstrahlungen sind gewünscht beispielsweise um über große Entfernungen Gebäudeflächen gezielt auszuleuchten oder um das Licht bereits innerhalb einer Leuchte weiterverarbeiten zu können, und dieses beispielsweise durch einen Reflektor in gewünschte Raumwinkelbereiche eines Gebäude leiten zu können.

Es besteht allerdings das Bedürfnis, bei einer Gebäudeleuchte, die neue Lichtquellen, wie beispielsweise LEDs, einsetzt, die Lichtverteilung zu optimieren.

Aus der EP 1617247 A2 geht eine Kollimatorlinse hervor, mit der parallele Lichtstrahlen erzeugt werden sollen.

Aus der EP 1970620 A1 geht ein Beleuchtungsgerät hervor, welches eine Lichtreflektionsfläche aufweist, die sich im Wesentlichen mantelförmig um die optische Achse herum erstreckt, derart, dass die Hauptabstrahlrichtung des Lichtes im Wesentlichen senkrecht zur optischen Achse liegt.

Die DE 10 2004 062 286 A1 zeigt eine Fahrzeug-Beleuchtungseinheit mit einem im Wesentlichen hufeisenförmigen oder V-förmigen Linsenelement.

Die Aufgabe der Erfindung wird daher darin gesehen, ein Linsenelement für eine Lichtquelle mit den Merkmalen des Oberbegriffes des Anspruches 1 derartig weiterzuentwickeln, dass damit eine optimierte Lichtverteilung möglich wird.

Die Erfindung löst diese Aufgabe mit den Merkmalen des Anspruches 1 und ist demgemäß dadurch gekennzeichnet, dass der Lichtleitungsabschnitt Grenzflächen aufweist, die von der Lichtquelle stammende und auf den ersten Mittelabschnitt treffende Lichtanteile zu dem zweiten Randabschnitt leiten und von der Lichtquelle stammende und auf den ersten Randabschnitt treffende Lichtanteile zu dem zweiten Mittelabschnitt leiten.

Das Prinzip der Erfindung besteht im Wesentlichen darin, das Linsenelement derartig auszubilden, dass gegenüber dem Stand der Technik geänderte Grenzflächen vorgesehen sind. Während beim Stand der Technik das von der Lichtquelle ausgesandte Licht mittig durch das Linsenelement hindurch tritt, ohne Totalreflektion zu erfahren, und lediglich radial äußere Lichtanteile eine Totalreflektion an außen liegenden Grenzflächen erfahren, ist bei dem erfindungsgemäßen Linsenelement eine innen liegende, Totalreflektion erlaubende Grenzfläche vorgesehen. Diese ermöglicht es, diejenigen Lichtanteile, die nahe der optischen Achse des Linsenelementes emittiert werden, zunächst infolge von Totalreflektion nach außen, auf außen liegende Grenzflächen zu leiten, und von dort infolge weiterer Reflektion oder Totalreflektion zu emittieren. Diese Lichtanteile werden also im Wesentlichen entlang des zweiten, im Wesentlichen ringförmigen Randabschnittes einer Lichtemissionsfläche emittiert.

Diejenigen Lichtanteile, die ausgehend von der Lichtquelle allerdings nicht mittig, sondern randseitig emittiert werden, also radial außen bezogen auf die optische Achse des Linsenelementes, werden infolge einer Reflektion an außen liegenden Grenzflächen, z. B. infolge einer Verspiegelung dieser Grenzflächen oder infolge von Totalreflektion an diesen Grenzflächen, nach Innen gelenkt, also in Bereiche nahe der optischen Achse. Diese Lichtanteile können durch einen zweiten Mittelabschnitt der Lichtemissionsfläche hindurch austreten.

Soweit im Rahmen dieser Patentanmeldung von Reflektion an den radial außen liegenden Grenzflächen gesprochen wird, kann damit einerseits gemeint sein, dass eine Reflektion von Lichtstrahlen an der Grenzfläche infolge von Totalreflektion, also bedingt durch einen bestimmten Einfallswinkel, erzielt wird. Andererseits umfasst der Begriff Reflektion an den äußeren Grenzflächen im Sinne der vorliegenden Patentanmeldung aber auch eine Reflektion an Grenzflächen, die verspiegelt sind. Insbesondere zur Vermeidung von Streulicht ist eine Verspiegelung durchaus vorteilhaft.

Die Erfindung bezieht sich auf Linsenelemente, die aus einem lichtleitenden Werkstoff, wie Acrylglas, PMMA, Glas oder dergleichen Materialien, bestehen. Es handelt sich um Linsenelemente, die eine enge Lichtverteilung bieten. Erfindungsgemäß ist die Erzielung eines parallelen Strahlenbündels oder eines nahezu parallelen Strahlenbündels möglich.

Vorzugsweise besteht das Linsenelement aus einem transparenten Material.

Das Linsenelement dient dem Zusammenwirken mit einer Lichtquelle, vorzugsweise wenigstens einer LED oder mehreren LEDs. Als Lichtquelle kann allerdings auch eine Lichtmisch- oder insbesondere eine Farbmischeinheit vorgesehen sein, die eine komplexe Lichtquelle darstellt. Diese Lichtmisch- Farbmischquelle kann beispielsweise mehrere LEDs, ein Lichtleitungselement und eine Diffusorfolie umfassen.

Das Linsenelement weist vorzugsweise eine erste Höhlung auf seiner der Lichtquelle zugewandten Seite auf. In diese Höhlung hinein kann die Lichtquelle eingesetzt werden oder nahe der ersten Höhlung herangebracht werden. Das Linsenelement wird vorzugsweise auf einer Platine befestigt, auf der zuvor die LEDs befestigt worden sind. Das Linsenelement kann mit seiner ersten Höhlung insoweit die Lichtquelle übergreifen.

Das Linsenelement weist eine Lichteinleitungsfläche auf, die der Lichtquelle zugewandt ist und durch die hindurch das von der Lichtquelle ausgesandte Licht in das Linsenelement hinein eintritt. Das Linsenelement weist darüber hinaus einen Lichtleitungsabschnitt auf, der für eine Weiterleitung des Lichtes von der Lichteinleitungsfläche zu einer Lichtemissionsfläche sorgt. Der Lichtleitungsabschnitt kann zahlreiche unterschiedliche Grenzflächen mit unterschiedlichen lichttechnischen Funktionen aufweisen.

Das Linsenelement umfasst darüber hinaus eine Lichtemissionsfläche, die der Lichtquelle abgewandt ist. Die Lichtemissionsfläche dient dem Austritt des Lichtes aus dem Linsenelement heraus.

Die Lichteinleitungsfläche lässt sich in zwei unterschiedliche Abschnitte unterteilen, nämlich in einen ersten Mittelabschnitt und einen ersten Randabschnitt. Der erste Mittelabschnitt ist zentral relativ zu einer Längsmittelachse des Linsenelementes angeordnet. Die Längsmittelachse des Linsenelementes stellt eine optische Achse des Körpers dar, der das Linsenelement bereitstellt. Die optische Achse ist einerseits die Rotationsachse des vorzugsweise rotationssymmetrisch ausgebildeten Linsenelementes und gibt andererseits die Hauptabstrahlrichtung des von dem Linsenelement emittierten Lichtes an.

Der erste Randabschnitt umgibt den ersten Mittelabschnitt im Wesentlichen ringförmig, vorzugsweise kreisringförmig.

Die Lichtemissionsfläche weist ebenfalls einen zentralen Mittelabschnitt und einen diesen ringförmig umgebenden Randabschnitt auf. Der Randabschnitt der Lichtemissionsfläche wird als zweiter Randabschnitt und der Mittelabschnitt der Lichtemissionsfläche wird als zweiter Mittelabschnitt bezeichnet.

Der erste Mittelabschnitt und der zweite Mittelabschnitt können unterschiedliche große Flächenbereiche aufweisen. Auch der erste Randabschnitt und der zweite Randabschnitt können unterschiedliche Flächen aufweisen.

Vorzugsweise ist das Linsenelement derartig ausgebildet, dass die Lichteinleitungsfläche deutlich kleiner ist als die Lichtemissionsfläche. Das Linsenelement ist mit seiner Hüllkontur in erster Näherung beispielsweise im Wesentlichen kegelstumpfförmig ausgebildet und erweitert sich insoweit in seinem Querschnitt hin zur Lichtemissionsfläche.

Der Lichtleitungsabschnitt des Linsenelementes weist Grenzflächen auf. Hierzu gehören bei einer vorteilhaften Ausgestaltung der Erfindung insbesondere optisch wirksame Flächen, die von Außenseiten des Linsenelementes gebildet werden, die die Kontur des Linsenelementes begrenzen.

Als Grenzfläche im Sinne der vorliegenden Patentanmeldung werden insoweit all diejenigen Flächen des Linsenelementes bezeichnet, die eine Grenzfläche zwischen zwei unterschiedlichen Medien darstellen, z.B. die Übergangsfläche zwischen den Medien Luft und Kunststoff, und die zur Lichtlenkung, d.h. Lichtbrechung oder zur Teilreflektion, beitragen.

Bei einer alternativen Ausgestaltung der Erfindung handelt es sich bei den Grenzflächen im Sinne der Erfindung um optisch wirksame Lichtlenkungs- oder Lichtleitungsflächen, die die Kontur des Linsenelementes nicht begrenzen.

Das Linsenelement umfasst im Bereich der Lichteinleitungsfläche gekrümmte Grenzflächen. Eine erste gekrümmte Grenzfläche ist im Bereich des ersten Mittelabschnittes, und eine zweite gekrümmte Grenzfläche ist im Bereich des ersten Randabschnittes angeordnet.

Eine dritte gekrümmte Grenzfläche stellt einen ersten, der Lichtquelle nahen Abschnitt einer äußeren Grenzfläche des Linsenelementes bereit. Eine vierte gekrümmte Grenzfläche stellt einen der Lichtquelle fernen Abschnitt der äußeren Grenzfläche des Linsenelementes bereit.

Schließlich ist eine fünfte, eben ausgebildete Grenzfläche vorgesehen, die nahe des zweiten Mittelabschnittes angeordnet ist.

Das Wirkprinzip der Erfindung sieht nun vor, dass Lichtanteile, die von der Lichtquelle kommend auf den ersten Mittelabschnitt treffen, zunächst auf die fünfte, eben ausgebildete Grenzfläche gelenkt werden und von dort infolge von Totalreflektion auf die vierte Grenzfläche, also radial nach Außen gelenkt werden. Von dieser vierten Grenzfläche erfolgt eine Reflektion infolge von Totalreflektion hin zu dem zweiten Randabschnitt, so dass diese Lichtanteile das Linsenelement verlassen können.

Diejenigen Lichtanteile, die ausgehend von der Lichtquelle auf den ersten Randabschnitt treffen, werden von dort auf die dritte Grenzfläche, also auf den der Lichtquelle nahen Abschnitt der außen liegenden Grenzfläche des Linsenelementes, gelenkt, und von dort infolge von Totalreflektion auf den zweiten Mittelabschnitt gelenkt. Diese Lichtanteile werden also von dem Linsenkörper in einem Bereich der Lichtemissionsfläche emittiert, der zentral innerhalb des zweiten Randbereiches liegt.

Damit werden zentral angeordnete Lichtanteile und außen angeordnete Lichtanteile ausgehend von der Lichtquelle bei ihrem Weg durch den Lichtleitungsabschnitt hindurch bezogen auf ihre radiale Positionierung miteinander vertauscht.

Hierdurch wird es einerseits möglich, ein Linsenelement mit einer großen Apertur, d. h. Öffnungsweite, zu erzielen, welches insgesamt eine enge, homogene Lichtverteilung erlaubt. Andererseits wird mit dem erfindungsgemäßen Linsenelement allerdings auch die Erzielung einer Lichtverteilung möglich, die die lichtemittierenden Strukturen der Lichtquelle, z.B. deren Konturen, nicht mehr auflöst. Damit kann eine deutlich homogenere Lichtverteilung erzielt werden.

Weiter vorteilhaft ist es vorgesehen, dass das Linsenelement erste und zweite Grenzflächen umfasst. Die ersten Grenzflächen leiten von der Lichtquelle stammende, und auf den ersten Mittelabschnitt treffende Lichtanteile infolge von Totalreflektion nach außen, bezogen auf die optische Achse, und die zweiten Grenzflächen leiten diese Lichtanteile infolge weiterer Totalreflektion zu dem zweiten Randabschnitt. Damit wird eine Ausbildung eines Linsenelementes möglich, die in ihrem Mittelbereich oder Zentrum keine herkömmliche Linse aufweist, sondern ein lichtlenkendes Element.

Weiter vorteilhaft ist vorgesehen, dass die Grenzflächen derartig ausgebildet sind, dass es zu einer Kreuzung von Lichtstrahlen innerhalb des Lichtleitungsabschnittes kommt. Hierdurch wird ein Radialtausch von Lichtanteilen möglich.

Das Linsenelement weist weiter vorteilhaft zwei Höhlungen auf. Eine erste Höhlung ist auf der der Lichtquelle zugewandten Seite, und eine zweite Höhlung ist auf der der Lichtquelle abgewandten Seite angeordnet. Die beiden Höhlungen erlauben eine materialsparende Ausbildung des Linsenelementes und ein Einsetzen der Lichtquelle in die erste Höhlung hinein. Hierdurch können Lichtverluste gering gehalten bzw. vermieden werden.

Weiter vorteilhaft ist die zweite Höhlung im Querschnitt im Wesentlichen dreieckförmig ausgebildet. Sie wird von ebenen, Grenzflächen bildenden Seitenflächen begrenzt. Die Spitze des Dreiecks liegt im Bereich der optischen Achse. Hierdurch wird die Anordnung von Grenzflächen möglich, die einerseits Totalreflektion für zentral emittierte Lichtanteile und eine Lichtlenkung für randseitig emittierte Lichtanteile erlaubt.

Weiter vorteilhaft ist die erste Höhlung von einem zirkuszeltartigen Querschnitt gebildet. Dieser weist ein Paar gekrümmter Seitenwände und ein Paar gekrümmter Dachwände auf. Der zirkuszeltartige Querschnitt weist eine Zeltspitze im Bereich der optischen Achse auf. Insbesondere ist der Querschnitt der ersten Höhlung bezogen auf die optische Achse des Linsenkörpers spiegelsymmetrisch ausgebildet.

Die Seitenwände und die Dachwände der ersten Höhlung sind gekrümmt und ermöglichen insoweit bereits eine Fokussierung der zentralen und der randseitigen Lichtanteile.

Weiter vorteilhaft sind die gekrümmten Seitenwände und die gekrümmten Dachwände jeweils über Richtungsknickstellen miteinander verbunden. Dies ermöglicht eine klare Trennung dieser unterschiedliche lichttechnische Funktionen erfüllenden Seitenwände und Dachwände.

Weiter vorteilhaft ist der Lichtleitungsabschnitt des Linsenelementes bezogen auf die optische Achse im Querschnitt im Wesentlichen spiegelsymmetrisch ausgebildet. Dies ermöglicht eine Erzielung einer rotationssymmetrischen Lichtverteilung.

Weiter vorteilhaft ist der Lichtleitungsabschnitt bezogen auf die optische Achse im Wesentlichen rotationssymmetrisch ausgebildet. Dies ermöglicht eine besonders rotationssymmetrische Lichtverteilung.

Weiter vorteilhaft weist der Lichtleitungsabschnitt im Bereich des ersten Mittelabschnittes und im Bereich des zweiten Mittelabschnittes, vorzugsweise im Bereich der optischen Achse, die geringste Wandstärke auf. Hierdurch kann bei einer Herstellung des Linsenelementes als Kunststoff-Spritzgussteil einen sehr günstige Weiterleitung des Kunststoffmaterials beim Spritzgießprozess erreicht werden. Insbesondere kann das Flussverhalten auf diese Weise optimiert werden und erlaubt die Herstellung auch sehr großer, d. h. im Bereich der Lichtemissionsfläche einen großen Durchmesser aufweisenden Linsenelemente.

Weiter vorteilhaft ist vorgesehen, dass mit dem Körper des Linsenelementes einstückig stoffschlüssig Befestigungsaufnahmen verbunden sind. Diese Befestigungsaufnahmen dienen beispielsweise der Aufnahme von Befestigungselementen, wie Schrauben.

Das Linsenelement ist vorteilhaft dadurch gekennzeichnet, dass die Grenzfläche einen ersten, der Lichtquelle nahen Abschnitt und einen zweiten, der Lichtquelle fernen Abschnitt aufweist, wobei der erste Abschnitt von der Lichtquelle stammende, direkte Lichtanteile auf einen der optischen Achse nahen Bereich der Lichtemissionsfläche leitet und wobei der zweite Abschnitt der Grenzfläche von der Lichtquelle stammende, indirekte Lichtanteile erst nach erfolgter Totalreflektion dieser Lichtanteile an einer innen liegenden Grenzfläche erhält und auf einen der optischen Achse fernen Bereich der Lichtemissionsfläche leitet.

Das Prinzip besteht im Wesentlichen darin, dass die radial außen liegende Grenzfläche des Linsenelementes in zwei Abschnitte unterteilt ist. Die außen liegende Grenzfläche umfasst einen ersten Abschnitt, der der Lichtquelle nahe ist, und einen zweiten Abschnitt, der der Lichtquelle fern ist. Der erste Abschnitt leitet Lichtanteile, die direkt von der Lichtquelle stammen, auf einen der optischen Achse des Linsenkörpers nahen Bereich der Lichtemissionsfläche, vorzugsweise auf einen Mittelbereich.

Der zweite Abschnitt der außen liegenden Grenzfläche leitet die indirekten Lichtanteile von der Lichtquelle, die zuvor an einer innen liegenden Grenzfläche des Lichtleitungsabschnittes totalreflektiert worden sind, auf einen der optischen Achse fernen Bereich der Lichtemissionsfläche, vorzugsweise auf einen zweiten Randbereich.

Hierdurch wird der zuvor bereits erläuterte Radialtausch von Lichtanteilen auf dem Weg von der Lichteinleitungsfläche zur Lichtemissionsfläche möglich.

Die Erfindung bezieht sich gemäß Anspruch 13 auf eine Gruppe von Linsenelementen. Die Besonderheit besteht hier darin, dass unterschiedliche Linsenelemente einen gleichen geometrischen, maßstäblichen Aufbau aufweisen, sich aber in ihren Abmessungen, d. h. in ihrer Größe, unterscheiden. Die Linsenelemente sind insoweit ohne Weiteres skalierbar und können an die Erfordernisse, z. B. an die Größen der Lichtquellen und/oder an die Größen der Leuchten bzw. zur Erzielung des gewünschten Grades der Enge einer Lichtverteilung, angepasst werden.

Weiter vorteilhaft umfasst die Erfindung eine Leuchte nach Anspruch 14.

Als Leuchte im Sinne der vorliegenden Patentanmeldung wird jede gebäudeseitig fest angeordnete Leuchte verstanden, die wenigstens eine Lichtquelle aufweist. Die Leuchte ist an einer ersten Gebäudefläche festgelegt und dient der Ausleuchtung einer zweiten Gebäudefläche, beispielsweise einer Deckenfläche, einer Bodenfläche oder einer Wandfläche eines Gebäudes, oder eines Außenraumes, oder eines Objektes, wie einer Statue, oder eines Möbelstückes oder dergleichen.

Die Leuchte kann Reflektorelemente und / oder Tertiäroptiken, also andere lichtleitende oder lichtrichtende oder lichtbeeinflussende Elemente aufweisen. Vorzugsweise umfasst die Leuchte eine Lichtquelle mit wenigstens einer LED. Darüber hinaus ist ein erfindungsgemäßes Linsenelement der zuvor beschriebenen Art vorgesehen.

Vorteilhaft ist die Leuchte dadurch gekennzeichnet, dass als Lichtquelle wenigstens eine farbänderbares Licht emittierende LED oder eine Mehrzahl von in Summe farbänderbares Licht emittierenden LEDs vorgesehen ist.

Die Leuchte kann als Lichtquelle auch eine Lichtmisch- oder Farbmischeinheit enthalten, die mehrere LEDs aufweist, die in einem kastenförmigen, insbesondere in Richtung der optischen Achse (M) des Linsenelementes langgestreckten Element angeordnet sind. Dieses kann verspiegelte Seitenwände aufweisen, wobei an der oder im Bereich der Lichtaustrittsöffnung ein Diffusorelement, z. B. eine Diffusorfolie, angeordnet sein kann. Am Boden des Elements können eine oder mehrere LEDs angeordnet sein. Die Farbmischeinheit wird an die erste Höhlung des Linsenelementes herangebracht, so dass bereits farblich durchmischtes Licht in die Lichteinleitungsfläche des Linsenkörpers eintritt.

Das Linsenelement kann insoweit neben der Erzielung einer besonders engen Lichtverteilung auch eine besonders gute homogene farbliche Durchmischung und die Verhinderung einer Auflösbarkeit der lichtemittierenden Strukturen gewährleisten.

Weitere Vorteile der Erfindung ergeben sich anhand der nicht zitierten Unteransprüche sowie aus der nachfolgenden Beschreibung der in den Figuren dargestellten Ausführungsbeispiele der Erfindung.

In den Figuren zeigen:
- Fig. 1: in einer schematischen, teilgeschnittenen Ansicht unter Darstellung des Verlaufes eines Teils der Lichtstrahlen ein Linsenelement des Standes der Technik,
- Fig. 2: in einer Darstellung ähnlich der Fig. 1 ein erstes Ausführungsbeispiel eines erfindungsgemäßen Linsenelementes,
- Fig. 3: das Linsenelement der Fig. 2 in einer schematischen, perspektivischen Ansicht,
- Fig.4: das Linsenelement der Fig. 3 in Draufsicht etwa entlang Ansichtspfeil IV in Fig. 3,
- Fig. 5: das Linsenelement der Fig. 4 in Ansicht gemäß Ansichtspfeil V in Fig. 4,
- Fig. 6: das Linsenelement der Fig. 4 in einer schematischen, teilgeschnittenen Ansicht etwa entlang Schnittlinie VI-VI in Fig. 4,
- Fig.7: das Linsenelement der Fig. 4 in einer teilgeschnittenen, schematischen Ansicht etwa entlang Schnittlinie VII-VII in Fig. 4,
- Fig. 8: in einer sehr schematischen Darstellung die Lichtverteilung, die sich mit einem Linsenelement des Standes der Technik gemäß Fig. 1 auf einer auszuleuchtenden Gebäudefläche ergibt,
- Fig. 9: in einer Darstellung der Fig. 8 die Lichtverteilung, die sich bei unveränderter Lichtquelle mit einem erfindungsgemäßen Linsenelement gemäß Fig. 2 ergibt,
- Fig. 10: in einer sehr schematischen, teilgeschnittenen Ansicht das erfindungsgemäße Linsenelement mit einem daran angesetzten Farbmischkasten,
- Fig. 11: das Ausführungsbeispiel der Fig. 10 mit einer schematischen, angedeuteten Verlauf der Lichtstrahlen,
- Fig. 12: ein weiteres Ausführungsbeispiel eines erfindungsgemäßen Linsenelementes mit daran angesetztem, geänderten Farbmischkasten in einer Darstellung ähnlich Fig. 11, und
- Fig. 13: in einer schematischen, teilgeschnittenen Ansicht ein Ausführungsbeispiel einer erfindungsgemäßen Leuchte, die ein erfindungsgemäßes Linsenelement einsetzt.

Der Figurenbeschreibung sei vorausgeschickt, dass der Übersichtlichkeit halber gleiche oder miteinander vergleichbare Teile oder Elemente, auch soweit unterschiedliche Ausführungsbeispiele betroffen sind, mit gleichen Bezugszeichen, teilweise unter Hinzufügung kleiner Buchstaben bezeichnet sind.

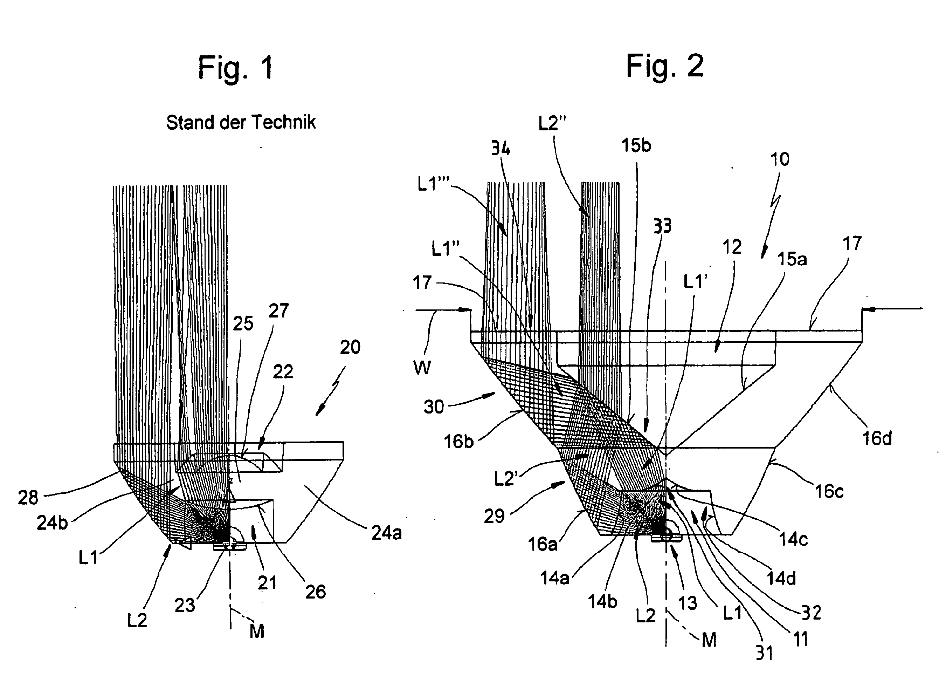

Anhand der Fig. 1 wird zunächst ein Linsenelement 20 des Standes der Technik und dessen lichttechnische Funktionsweise erläutert:

Fig. 1 zeigt das Linsenelement 20 des Standes der Technik, welches einen etwa H-förmigen Querschnitt aufweist. Der Linsenkörper wird von zwei vertikalen H-Schenkeln 24a, 24b und einem horizontalen H-Schenkel 25 bereitgestellt. Das Linsenelement umfasst eine erste, einer Lichtquelle 23, insbesondere einer LED, zugewandte Höhlung 21 und eine zweite, der LED 23 abgewandte Höhlung 22.

Der horizontale H-Schenkel 25 weist eine konvex gekrümmte Unterseite 26 und eine konvex gekrümmte Oberseite 27 auf. Insgesamt bildet der horizontale H-Schenkel 25 insoweit eine Sammellinse, also eine Abbildungsposition, aus.

Das mit L₁ bezeichnete zentrale Lichtbündel wird ausgehend von der LED 23 zweifach gebrochen und verlässt als im Wesentlichen paralleles Strahlenbündel die Oberseite 27 des Linsenelementes 20. Der horizontale H-Schenkel 25 des Linsenelementes 20 fungiert somit als eine Art Sammellinse.

Das Linsenelement 20 des Standes der Technik weist eine radial außen liegende Grenzfläche 28 auf, die leicht gekrümmt oder nahezu eben ausgebildet ist. An dieser Grenzfläche 28 findet eine Totalreflektion des von der Lichtquelle 23 stammenden, randseitig, d.h. radial außen emittierten, und auf die Grenzfläche 28 treffenden Lichtes L₂ statt. Auch hierdurch wird ein Strahlenbündel emittiert, welches im Wesentlichen parallel zur optischen Achse M des Linsenelementes 20 gerichtet ist und entlang dieser Hauptabstrahlrichtung M das Linsenelement 20 verlässt.

Fig. 2 zeigt demgegenüber ein erstes Ausführungsbeispiel eines erfindungsgemäßen Linsenelementes 10.

Das Linsenelement 10 ist deutlich größer ausgebildet als das Linsenelement des Standes der Technik und weist eine größere Öffnungsweite W, die sogenannte Apertur, auf.

Das Linsenelement 10 gemäß der Erfindung weist im Unterschied zu dem Grundaufbau des Linsenelementes 20 des Standes der Technik keinen H-förmigen, sondern einen im Wesentlichen W-förmigen Querschnitt auf. Dieser W-förmige Querschnitt führt zur Bildung einer ersten, einer Lichtquelle 13 zugewandten Höhlung 11 und einer zweiten, der Lichtquelle 13 abgewandten zweiten Höhlung 12.

Als Lichtquelle sei für dieses Ausführungsbeispiel zunächst einmal eine LED 13 angenommen.

Die erste Höhlung 11 weist einen im Wesentlichen zirkuszeltförmigen Querschnitt auf, der von zwei gekrümmten Seitenwänden 14a, 14d und zwei gekrümmten Dachwänden 14b, 14c begrenzt ist.

Die zweite Höhlung 12 ist im Wesentlichen dreieckförmig ausgebildet und von zwei ebenen Seitenflächen 15a, 15b begrenzt.

Die Außenkontur des Linsenelementes 10 lässt sich in einen ersten, der Lichtquelle 13 nahen Abschnitt 29 und einen zweiten, der Lichtquelle fernen Abschnitt 30 unterteilen.

Bei Betrachtung des Querschnittes des Linsenelementes 10 gemäß Fig. 2 ist der lichtquellennahe Abschnitt 29 von einem Paar gekrümmter Grenzflächen 16a, 16c begrenzt und der lichtquellenferne Abschnitt 30 von einem Paar gekrümmter Grenzflächen 16b, 16d.

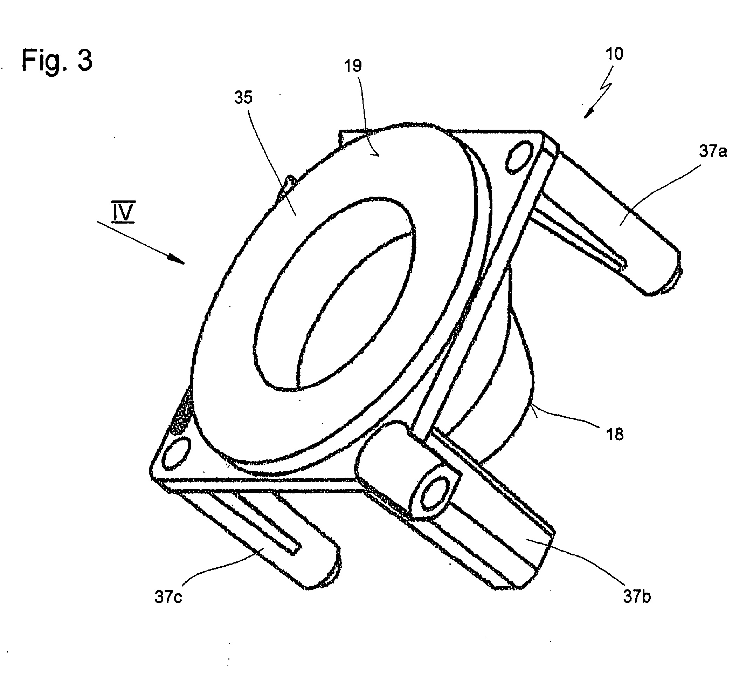

Wie bei der Darstellung der Fig. 1 ist in Fig. 2 lediglich im Bereich einer Hälfte des Querschnittes des Linsenelementes 10 der Lichtstrahlenverlauf angedeutet. Dem Fachmann wird aber deutlich, dass es infolge einer rotationssymmetrischen Ausbildung des erfindungsgemäßen Linsenelementes 10, wie dies beispielsweise aus den Figuren 3 bis 7 hervorgeht, grundsätzlich zu einer im Wesentlichen rotationssymmetrischen Lichtverteilung kommt, die später noch erläutert wird.

Bei Betrachtung der Fig. 2 wird deutlich, dass ausgehend von der LED 13, die im Bereich der optischen Achse M des Linsenelementes 10 angeordnet ist, ein erstes, zentrales, radial inneres Lichtstrahlenbündel L₁ und ein zweites, radial äußeres Lichtstrahlenbündel L₂ erkennbar ist. Das Lichtstrahlenbündel L₂ umfasst ausweislich Fig. 2 etwa all diejenigen Lichtstrahlen, die ausgehend von der LED 13 zwischen einem Winkel von 0° und 45° emittiert sind. Sämtliche der Lichtstrahlen des Lichtstrahlenbündels L₂ treffen auf die Grenzfläche 14a und werden aufgrund ihrer konvexen Ausbildung gebündelt. Sie treffen anschließend auf die Grenzfläche 16a und werden hier wiederum reflektiert, z. B. infolge einer Verspiegelung dieser Grenzflächen. Das auf diese Weise reflektierte Lichtstrahlenbündel L₂' wird radial nach innen gelenkt und trifft auf die Grenzfläche 15b. An der Grenzfläche 15b werden die Strahlen geringfügig gebrochen und verlassen als Lichtstrahlenbündel L₂" das Linsenelement 10. Das Lichtstrahlenbündel L₂" ist im Wesentlichen parallel zur optischen Achse M ausgerichtet.

Das zweite, radial innere Lichtstrahlenbündel L₁ umfasst die Schar sämtlicher Lichtstrahlen, die ausgehend von der LED 13 zwischen einem Winkel größer als 45° und kleiner als 90° emittiert werden. Die Lichtstrahlen des Lichtstrahlenbündels L₂ treffen auf die ebenfalls konvex gekrümmte Grenzfläche 14b und werden hierdurch gebündelt. Dieses Lichtstrahlenbündel L₁' wird auf die Innenseite der Grenzfläche 15b geworfen und an dieser totalreflektiert. Es erfolgt eine Reflektion radial nach außen. Das totale reflektierte Lichtbündel wird als L_{1"} bezeichnet und wird auf die Grenzfläche 16b der Außenkontur des Linsenelementes 10 geworfen. An dieser Grenzfläche 16b findet eine weitere Reflektion statt, so dass das Lichtstrahlenbündel L_{1"}infolge der Reflektion als Lichtstrahlenbündel L1'" das Linsenelement 10 verlässt. Auch das Lichtstrahlenbündel L₁'" ist im Wesentlichen parallel ausgerichtet zur optischen Achse M des Linsenelementes 10.

Zusammenfassend lässt sich also feststellen, dass die Grenzflächen 15a, 15b im Bereich des zweiten Mittelabschnittes 33 einerseits totalreflektierend, andererseits lichtbrechend ausgebildet sind.

Es wird angemerkt, dass die Unterteilung der beiden Lichtbündel L₁, L₂ bei einem Grenzwinkel von 45° willkürlich getroffen ist. Es ist auch möglich, die Unterscheidung zwischen den beiden Lichtbündeln L₁, L₂, die miteinander einen Radialtausch erfahren sollen, bei einem anderen Grenzwinkel zu treffen, beispielsweise bei einem Grenzwinkel größer als 30° oder kleiner als 60°.

Es wird deutlich, dass die Innenseite der ersten Höhlung 11 eine Lichteinleitungsfläche 18 bereitstellt, die einen ersten Mittelabschnitt 31 und einen ersten Randabschnitt 32 aufweist. Der erste Randabschnitt 32 umgibt den ersten Mittelabschnitt 31 im Wesentlichen ringförmig. Der erste Mittelabschnitt 31 wird von dem Paar der Grenzflächen 14b, 14c bereitgestellt und die erste Randabschnitt 32 wird durch das Paar der Grenzflächen 14a, 14d bereitgestellt.

Das Linsenelement 10 weist auch eine Lichtemissionsfläche 19 auf, die gleichermaßen einen zweiten Mittelabschnitt 33 und einen zweiten Randabschnitt 34 aufweist. Der zweite Randabschnitt 34 wird durch die Ringstirnfläche 17 bereitgestellt, und der zweite Mittelabschnitt 33 wird durch das Paar der Grenzflächen 15a, 15b bereitgestellt.

Der angedeutete Verlauf der Lichtstrahlen gemäß Fig. 2 veranschaulicht, dass die von der LED 13 ausgehenden, radial inneren, also nahe der optischen Achse M emittierten Lichtstrahlen den Linsenkörper 10 durch die Lichtemissionsfläche 19 hindurch im Bereich des zweiten Randabschnittes 34 verlassen.

Die von der LED 13 emittierten randlichen Lichtanteile, die radial betrachtet außerhalb der zuvor beschriebenen Lichtanteile angeordnet sind, verlassen den Linsenkörper 10 allerdings im Bereich des zweiten Mittelabschnittes 33.

Damit findet ein Radialtausch der Lichtanteile L₁, L₂ zu Lichtstrahlbündeln L₂", L₁'" statt. Durch diesen Radialtausch sind die Strukturen der lichtemittierenden Lichtquelle 13 nicht mehr auflösbar. Das Linsenelement 10 kann in einer erfindungsgemäßen Leuchte zur Ausleuchtung einer Gebäudefläche eingesetzt werden, ohne dass sich auf der Gebäudefläche oder in der von der Leuchte erzielten Lichtverteilung die Strukturen oder Konturen der Lichtquelle noch erkennen lassen. Dies ist insbesondere gewünscht, um eine homogene Ausleuchtung einer Gebäudefläche zu erzielen.

Darüber hinaus wird durch die erfindungsgemäße radiale Umkehr der Lichtanteile die Möglichkeit bereitgestellt, ein Linsenelement mit einer großen Öffnungsweite W bereitzustellen und hierdurch eine sehr eng abstrahlende Lichtverteilung zu erzielen. Damit können auch weit entfernt von einer Leuchte 40 angeordnete Gebäudeflächen mit hohen Lichtströmen homogen und auch gezielt ausgeleuchtet werden. Insbesondere ermöglicht dies auch die Verwendung von eng abstrahlenden Lichtquellen wie LEDs, zur Bildung einer Spot-Leuchte.

Anhand der Fig. 3 wird deutlich, dass das erfindungsgemäße Linsenelement 10 neben dem eigentlichen Linsenkörper 35, der die Lichteinleitungsfläche 18, die Lichtemissionsfläche 19 und den Lichtleitungsabschnitt 36 umfasst, auch noch Befestigungsaufnahmen 37a, 37b, 37c, 37d für Befestigungselemente aufweist. Die Befestigungsaufnahmen 37a, 37b, 37c, 37d sind einstückig, stoffschlüssig als Kunststoffspritzgussteil aus einem transparenten, lichtleitenden Material, wie PMMA, gebildet.

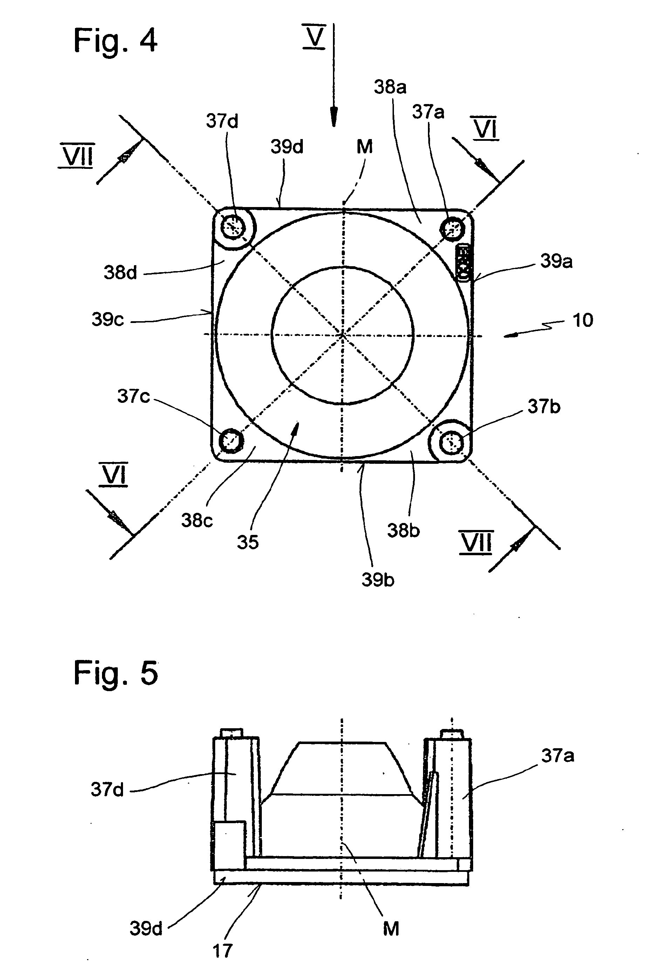

Die Fig. 4 macht deutlich, dass der Körper 35 des Linsenelementes 10 um die optische Achse M herum rotationssymmetrisch ausgebildet ist. Die Befestigungsaufnahmen können allerdings an eckenartigen, vorspringenden Lappen 38a, 38b, 38c, 38d befestigt sein, die zu einer im Wesentlichen quadratischen Kontur der Oberseite des Körpers führen können. Dies ermöglicht auch eine Gruppierung mehrerer Linsenelemente 10 gemäß dieser Ausbildungsform entlang einer Ebene nebeneinander, so das reihenartige oder flächenartige Ausbildungen und Gruppierungen von gleichen Linsenelementen nach Art eines Rasters entstehen. Die Kantenseiten 39a, 39b, 39c, 39d können insoweit auch Anlageflächen für benachbarte Linsenelemente bereitstellen und deren einfache Positionierung ermöglichen.

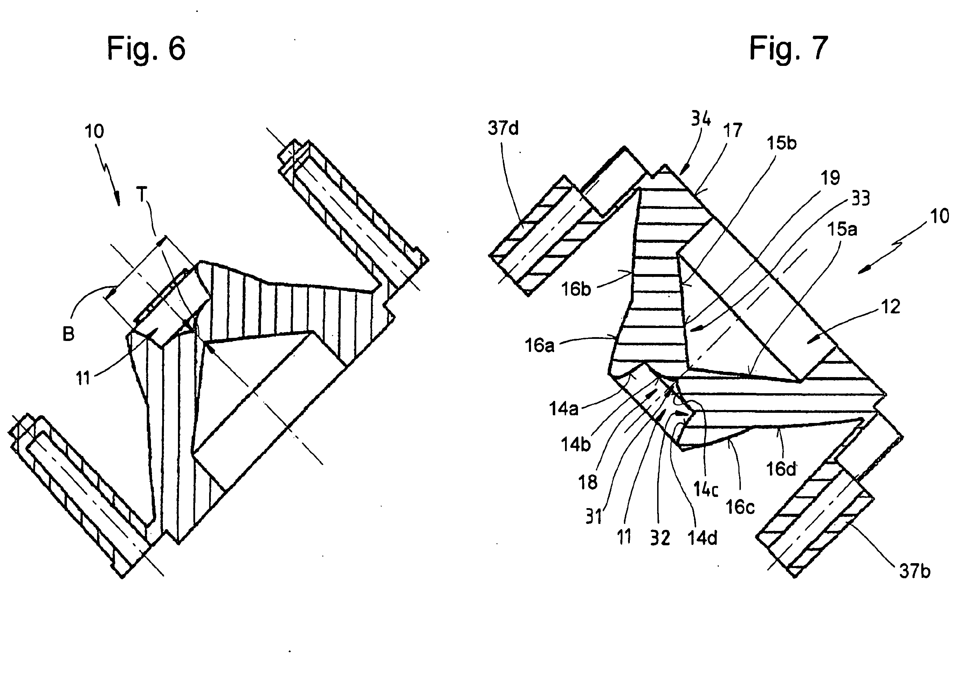

Die Fig. 6 und 7 machen deutlich, dass die Befestigungsaufnahmen 37a, 37c hohl ' ausgebildet sind und den Durchgriff von Befestigungselementen ermöglichen.

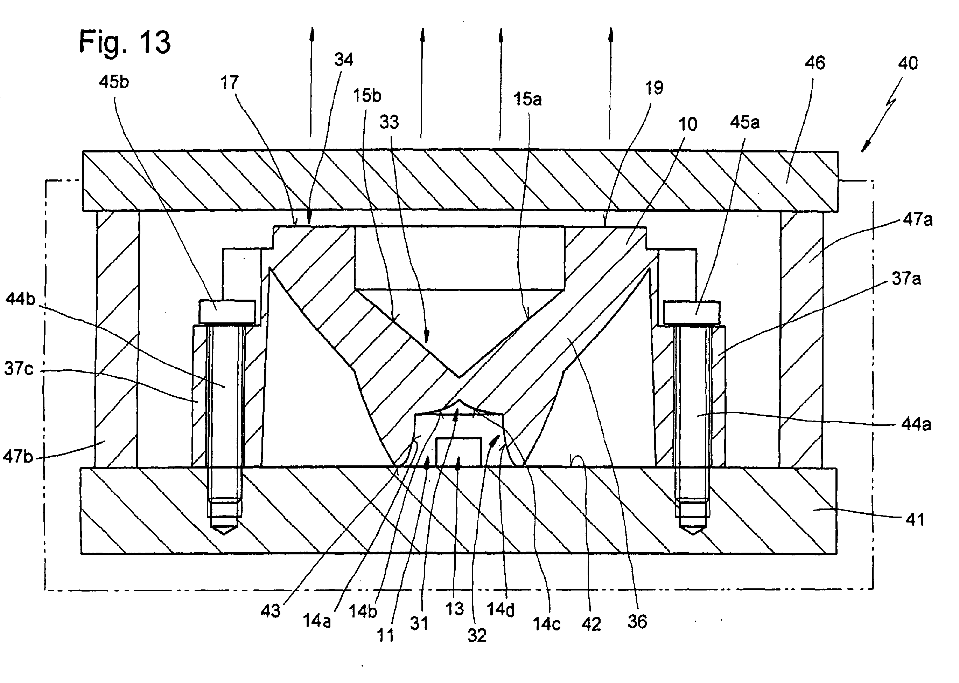

Fig. 13 zeigt eine erfindungsgemäße Leuchte 40 in einer teilgeschnittenen, schematischen Ansicht.

Man erkennt eine Platine 41, auf der in herkömmlicher Weise eine LED 13 befestigt, beispielsweise festgelötet ist. Die Leiterplatte 41 verfügt über nicht dargestellte Leiterbahnen auf der Ober- und / oder auf der Unterseite. Insbesondere können auch weitere, nicht dargestellte, elektrische und elektronische Bauelemente vorgesehen sein. Fig. 13 zeigt auch keine Spannungsversorgungsleitungen für die Lichtquelle 13.

Auf der Oberseite 42 der Platine 41 liegt das Linsenelement 10 mit seiner Unterseite 43 in einem ringförmigen Bereich auf. Die Befestigungsaufnahmen 37a, 37c sind von Schraubelementen 44a, 44b durchgriffen, die an der Platine 41 festgeschraubt sind. Die Befestigungsschrauben 44a, 44b drücken mit ihrem verbreiterten Kopfbereichen 45a, 45b den Linsenköper 10 gegen die Oberseite 42 der Platine 41.

In der ersten Höhlung 11 des Linsenelementes 10 ist die Lichtquelle 13 angeordnet. Das von den LEDs 13 oder wenigstens einer LED 13 emittierte Licht verlässt das Linsenelement 13 in Übereinstimmung mit dem in Fig. 2 angedeuteten Lichtstrahlverhalten.

Eine weitere, sogenannte Tertiär-Optik 46 kann an der Leuchte im Rahmen einer Abschlussscheibe oder eines Diffusorelementes vorgesehen sein. Die Platine 41 ist über Gehäusewandbereiche 47a, 47b relativ zu der Tertiäroptik 46 festgelegt.

Alternativ kann ein in Fig. 13 gestrichelt dargestelltes Gehäuse 48 die Platine 41 mit umfassen. Die erfindungsgemäße Leuchte 40 dient zur Erzeugung einer engen, gerichteten Lichtverteilung.

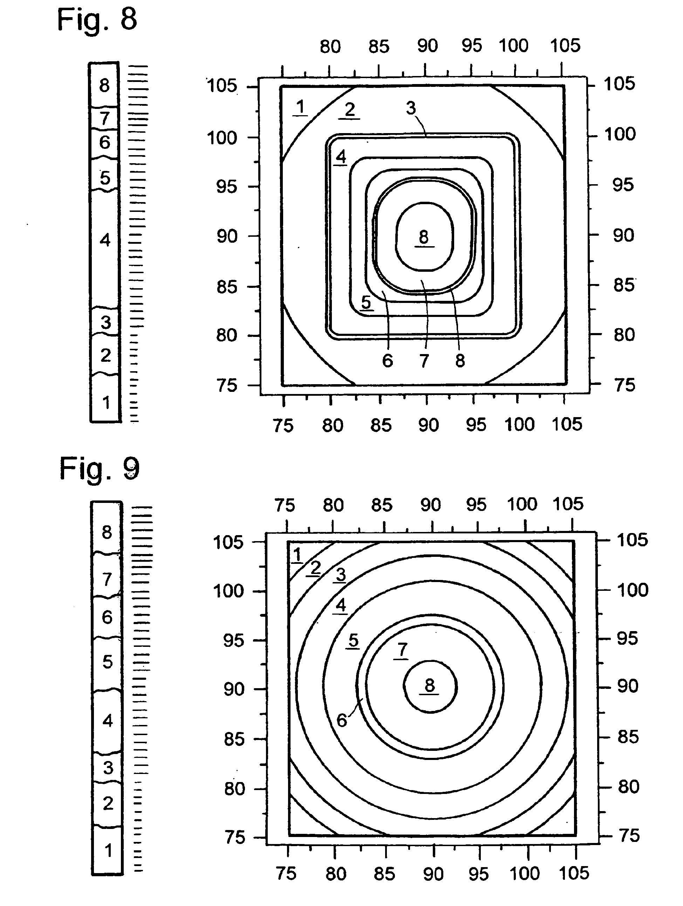

Anhand der Fig. 8 und 9 soll nun erläutert werden, welche Lichtverteilungen und Linsenelemente gemäß den Figuren 1 und 2 erzielt werden können.

Im Folgenden sei angenommen, dass eine einzige LED eines herkömmlichen LED-Chips quadratischer Geometrie mit einem herkömmlichen Linsenelement 20 gemäß dem Stand der Technik zusammenwirkt. Die auf diese Weise generierte Lichtverteilung ist in Fig. 8 dargestellt. Der linke Teil der Fig. 8 zeigt eine Legende mit acht Bereichen unterschiedlicher Lichtstärken. Der rechte Teil der Fig. 8 zeigt die Lichtverteilung, die sich auf einer ausgeleuchteten Gebäudefläche ergibt. Man erkennt, dass sich die Geometrie des quadratischen LED-Chips, also die Kontur der Lichtemissionsfläche der LED in der Lichtverteilung abzeichnet. Die quadratische Form ist deutlich erkennbar.

Fig. 9 zeigt die Lichtverteilung, die unter Einsatz der gleichen LED bei Verwendung eines erfindungsgemäßen Linsenelementes 10 gemäß Fig. 2 erzielt werden kann: Man erkennt, dass die quadratische Kontur des LED-Chips nicht mehr auflösbar ist. Stattdessen ist eine im Wesentlichen rotationssymmetrische Lichtverteilung und dessen Vergleichmäßigung erreicht worden.

Durch den Vergleich der Figuren 8 und 9 erkennt man deutlich, dass bei einem Linsenelement des Standes der Technik die zentral angeordnete Abbildungsoptik die Kontur der Lichtaustrittsfläche abbildet. Die erfindungsgemäße Kollimatorlinse verwendet im zentralen, mittig angeordneten Bereich keine Sammellinse und umfasst erstmalig keine Abbildungsoptik.

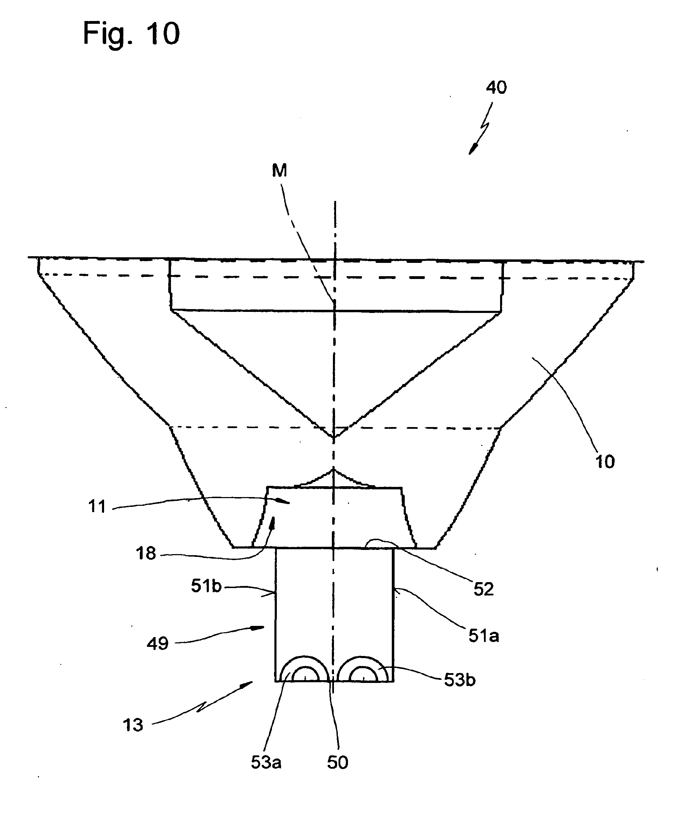

Im Folgenden soll anhand der Figuren 10 bis 12 verdeutlicht werden, dass die erfindungsgemäße Leuchte 40 als Lichtquelle 13 auch ein Element verwenden kann, welches als Farbmischkasten oder Lichtmischkasten bezeichenbar ist.

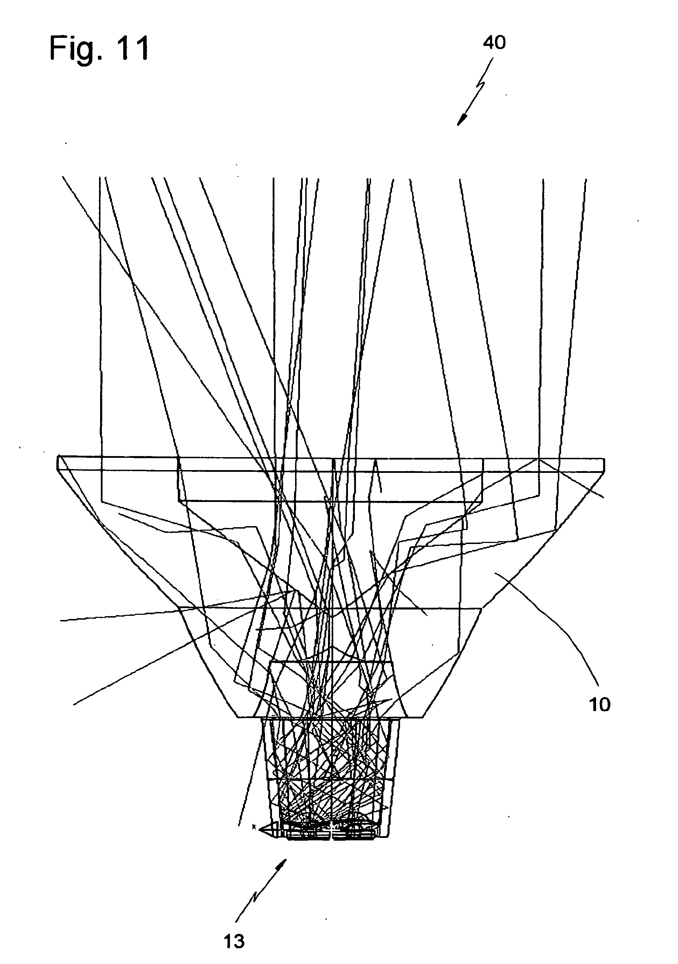

Bei den Ausführungsbeispielen der Figuren 10 und 11 ist unmittelbar an die Lichteintrittsfläche 18 ein Lichtmischkasten 49 herangebracht. Der Lichtmischkasten 49 kann einen z.B. quadratischen Querschnitt aufweisen und umfasst eine Bodenwand 50, Seitenwände 51 a, 51 b und ein Deckenelement 52. Am Boden 50 sind mehrere, z.B. unterschiedlich farbige LEDs 53a, 53b angeordnet. Von den LEDs 53a, 53b wird Licht entsprechend einer Lambert'schen Verteilung emittiert. Die Seitenwände 51 a, 51 b sind verspiegelt oder diffus streuend ausgebildet. In Folge von Vielfachreflektion kommt es zu einer regelrechten Durchmischung des LED-Lichtes, was beispielsweise anhand des schematischen Lichtstrahlverlaufes, der in Fig. 11 dargestellt ist, verdeutlicht ist.

Die Deckenwand 52 des kastenförmigen Elementes 49 ist von einer transluzenten Diffusorfolie bereitgestellt. Das bereits infolge der Mehrfachreflektion farblich durchmischte Licht wird durch dieses Diffusorelement 52 noch weiter durchmischt.

Die primäre Lichtquelle 49 wird also von einem komplexen Element bereitgestellt.

Das von der Diffusorfolie 52 emittierte Licht gelangt in die erste Höhlung 11 und trifft auf die Lichteintrittsfläche 18. Dort wird es entsprechend dem Verlauf der Lichtstrahlen der Fig. 2 weitergeleitet. Auch unter Einsatz eines komplex aufgebauten Farbmischkastens 49 wird insoweit eine eng abstrahlende Lichtverteilung mit dem Linsenelement 10 erreicht. Außerdem kann infolge des Radialtausches innerer und äußerer Lichtanteile L₁, L₂ entsprechend der oben, bei dem Ausführungsbeispiel der Fig. 2 beschriebenen Lichtleitung erreicht werden, dass eine weitere farbliche Durchmischung möglich wird. Mit einer erfindungsgemäßen Leuchte 40, die ein erfindungsgemäßes Linsenelement 10 und einen Farbmischkasten 49 gemäß dem Ausführungsbeispiel der Figuren 10 und 11 verwendet, kann insoweit auch eine besonders gute farbliche Durchmischung erzielt und eine Auflösung farblich unterschiedlicher Einzel-Lichtquellen verhindert werden.

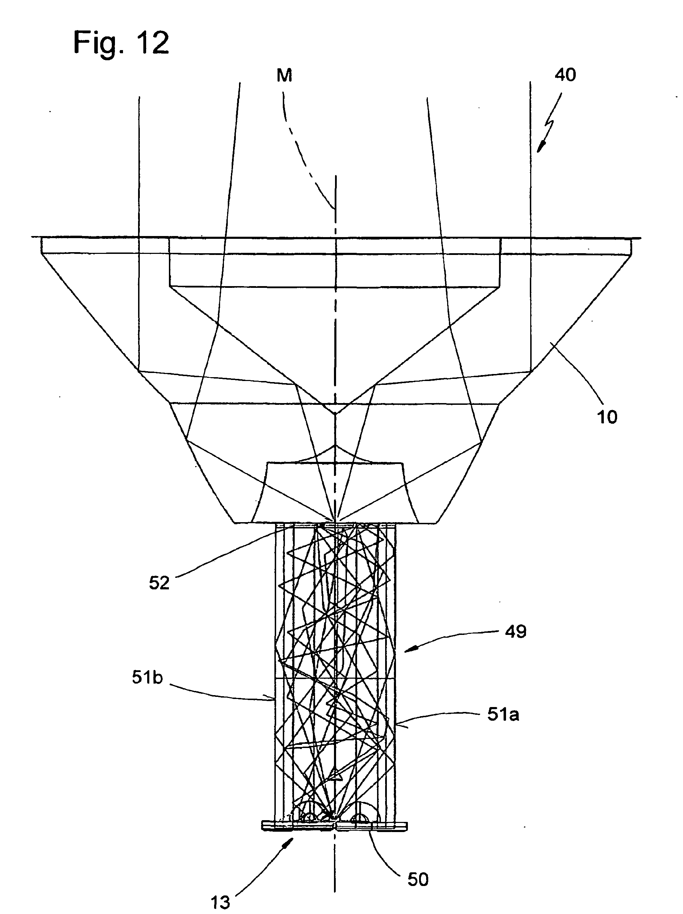

Bei dem Ausführungsbeispiel der Fig. 12 ist ein zu dem Ausführungsbeispiel der Figuren 10 und 11 ähnlicher Lichtmischkasten 49 vorgesehen, der allerdings in Richtung der optischen Achse M axial länger ausgebildet ist. Hierdurch kann die Zahl der Reflektionen noch erhöht werden und damit der Grad der Durchmischung weiter verbessert werden. Wiederum sorgt das erfindungsgemäße Linsenelement 10 infolge des Radialtausches der Lichtanteile für eine besonders eng abstrahlende Lichtverteilung und für eine besonders gute farbliche Durchmischung. Angemerkt sei, dass die Zahl der Lichtstrahlen, die durch das Linsenelement 10 verlaufen, bei dem Ausführungsbeispiel der Fig. 12 aus Gründen der Übersichtlichkeit gegenüber der Zahl der Lichtstrahlen, die innerhalb des Farbmischkastens 49 dargestellt sind, deutlich reduziert worden ist.

Die erfindungsgemäße Kollimatorlinse 10 weist, was beispielsweise anhand der Fig. 6 deutlich wird, eine Wandstärke T auf, die im Bereich der optischen Achse M am geringsten ist. Hierdurch kann bei der Herstellung des erfindungsgemäßen Linsenelementes 10 der Kunststofffluss beim Spritzgießvorgang optimiert werden. Das Material kann in der erforderlichen Genauigkeit bis zur Mitte des Linsenelementes 10 fließen und auf diese Weise beim Erkalten gleichmäßig schrumpfen, so dass die gewünschten Konturen der Grenzflächen erzielt werden können.

Der Querschnitt des erfindungsgemäßen Linsenelementes 10 gemäß Fig. 6 ist insbesondere einschnürungsfrei. Die erste Einschnürung, die das Kunststoff-Spritzgießmaterial beim Fließen von außen nach innen hin sieht, ist die mittig zentrale Einschnürung im Bereich der geringsten Wandstärke T. Da aber vorteilhaft an mehreren radial außen gelegenen Einspritzpunkten eingespritzt wird, kann das Kunststoffmaterial jeweils bis zur Mitte hin fließen, ohne dass Strömungshindernisse bestehen.

Das erfindungsgemäße Linsenelement kann, wie dies der Vergleich der Figuren 1 und 2 zeigt, deutlich größer gefertigt werden als Linsenelemente 20 des Standes der Technik. Auch die Höhlung 11 kann zur Unterbringung einer oder mehrerer LEDs entsprechend groß ausgebildet werden. Insbesondere können in der ersten Höhlung nunmehr kleine und wenige, gegebenenfalls auch nur eine einzige LED, untergebracht werden. Andererseits ermöglicht die große Dimensionierung der Höhlung auch die Unterbringung mehrerer LEDs. Insbesondere können auch Multi-Chip-LEDs eingesetzt werden, die unmittelbar in die Höhlung 11 eingebracht werden, ohne dass diese Bestandteil eines Farbmischkastens 49 gemäß den Ausführungsbeispielen der Figuren 10 bis 12 sein müssen.

Ergänzend sei angemerkt, dass die Breite B der Öffnung der ersten Höhlung 11 bei dem Ausführungsbeispiel der Fig. 6 beispielsweise 7mm beträgt. Demgegenüber beträgt eine Chipgröße eines herkömmlichen LED-Chips derzeit etwa 1x1mm. Ein Multi-LED-Chip weist eine Größe von 4x4mm auf und kann insoweit in der ersten Höhlung 11 untergebracht werden.

Grundsätzlich sei angemerkt, dass bei Verwendung kleiner dimensionierter LEDs und einer groß ausgebildeten erfindungsgemäßen Kollimatorlinse 10 eine besonders enge Lichtverteilung erzielbar ist. Das erfindungsgemäße Linsenelement 10 kann allerdings auch mit größer dimensionierten Lichtquellen operieren und immer noch eine enge Lichtverteilung gewährleisten.

## Patentansprüche

1. Linsenelement (10) für eine Lichtquelle (13), insbesondere für wenigstens eine LED, umfassend einen Körper (35) aus lichtleitendem Material, mit einer Lichteinleitungsfläche (18), einem Lichtleitungsabschnitt (36), und einer Lichtemissionsfläche (19), wobei die Lichteinleitungsfläche einen ersten zentralen Mittelabschnitt (31) nahe einer optischen Achse (M) des Körpers und einen den ersten Mittelabschnitt im wesentlichen ringförmig umgebenden ersten Randabschnitt (32) aufweist, und wobei die Lichtemissionsfläche einen zweiten zentralen Mittelabschnitt (33) nahe der optischen Achse des Körpers aufweist, dadurchgekennzeichnet, dass die Lichtemissionsfläche einen den zweiten Mittelabschnitt im wesentlichen ringförmig umgebenden zweiten Randabschnitt (34) aufweist, und, dass der Lichtleitungsabschnitt Grenzflächen (15a, 15b. 16b, 16d) aufweist, die von der Lichtquelle (13) stammende und auf den ersten Mittelabschnitt (31) treffende Lichtanteile (L₁) zu dem zweiten Randabschnitt (34) leiten und Grenzflächen (14a, 14d, 16a, 16c) aufweist, die von der Lichtquelle stammende und auf den ersten Randabschnitt (32) treffende Lichtanteile (L₂) zu dem zweiten Mittelabschnitt (33) leiten.

2. Linsenelement nach Anspruch 1, **dadurch gekennzeichnet, dass** die Grenzflächen erste Grenzflächen (15a, 15b) und zweite Grenzflächen (16b, 16d) umfassen, wobei die ersten Grenzflächen (15a, 15b) von der Lichtquelle (13) stammende und auf den ersten Mittelabschnitt (31) treffende Lichtanteile (L₁) infolge von Totalreflektion bezogen auf die optische Achse (M) nach außen leiten und die zweiten Grenzflächen (16b, 16d) diese Lichtanteile (L1") infolge weiterer Totalreflektion oder Reflektion, insbesondere infolge einer Verspiegelung der zweiten Grenzflächen, zu dem zweiten Randabschnitt (34) leiten.

3. Linsenelement nah Anspruch 1 oder 2, **dadurch gekennzeichnet, dass** die Grenzflächen (14a, 14b, 14c, 14d, 15a, 15b, 16a, 16b, 16c, 16d) derartig ausgebildet sind, dass es zu einer Kreuzung von Lichtstrahlen innerhalb des Lichtleitungsabschnittes (36) kommt.

4. Linsenelement nach einem der vorangegangenen Ansprüche, **dadurch gekennzeichnet, dass** der Körper (35) auf seiner der Lichtquelle (13) zugewandten Seite eine erste Höhlung (11) und auf seiner der Lichtquelle abgewandten Seite eine zweite Höhlung (12) aufweist.

5. Linsenelement nach Anspruch 4, **dadurch gekennzeichnet, dass** die zweite Höhlung (12) im Querschnitt im Wesentlichen dreieckförmig ausgebildet und von ebenen Seitenflächen (15a, 15b) begrenzt ist.

6. Linsenelement nach Anspruch 4 oder 5, **dadurch gekennzeichnet, dass** die erste Höhlung (11) einen zirkuszeltartigen Querschnitt aufweist, der von einem Paar gekrümmter Seitenwände (14a, 14d) und einem Paar gekrümmter Dachwände (14b, 14c) gebildet ist.

7. Linsenelement nach Anspruch 6, **dadurch gekennzeichnet, dass** die gekrümmten Seitenwände (14a, 14d) und Dachwände (14b, 14c) jeweils über Richtungsknickstellen miteinander verbunden sind.

8. Linsenelement nach einem der vorangegangenen Ansprüche, **dadurch gekennzeichnet, dass** der Lichtleitungsabschnitt (36) bezogen auf die optische Achse (M) im Querschnitt im Wesentlichen spiegelsymmetrisch ausgebildet ist.

9. Linsenelement nach einem der vorangegangenen Ansprüche, **dadurch gekennzeichnet, dass** der Lichtleitungsabschnitt (36) bezogen auf die optische Achse (M) im Wesentlichen rotationssymmetrisch ausgebildet ist.

10. Linsenelement nach einem der vorangegangenen Ansprüche, **dadurch gekennzeichnet, dass** der Lichtleitungsabschnitt (36) im Bereich des ersten Mittelabschnittes (31) und im Bereich des zweiten Mittelabschnittes (33), insbesondere nahe der optischen Achse (M), die geringste Wandstärke aufweist.

11. Linsenelement nach einem der vorangegangenen Ansprüche, **dadurch gekennzeichnet, dass** einstückig stoffschlüssig mit dem Körper (35) Befestigungsaufnahmen (37a, 37b, 37c, 37d) für Befestigungselemente (44a, 44b), wie Schrauben, verbunden sind.

12. Linsenelement (10) nach Anspruch 1, umfassend einen Körper (35) aus lichtleitendem Material, mit einer Lichteinleitungsfläche (18), einem Lichtleitungsabschnitt (36), und einer Lichtemissionsfläche (19), wobei der Lichtleitungsabschnitt eine Reflektion ermöglichende, bezogen auf eine optische Achse (M) des Körpers außen liegende Grenzfläche (16a, 16b, 16c, 16d) aufweist, **dadurch gekennzeichnet, dass** die Grenzfläche einen ersten, der Lichtquelle (13) nahen Abschnitt (16a, 16c) und einen zweiten, der Lichtquelle fernen Abschnitt (16b, 16d) aufweist, wobei der erste Abschnitt (16a, 16c) von der Lichtquelle stammende direkte Lichtanteile (L₂) auf einen der optischen Achse (M) nahen Bereich (33) der Lichtemissionsfläche (19) leitet und wobei der zweite Abschnitt (16b, 16d) der Grenzfläche von der Lichtquelle (13) stammende indirekte Lichtanteile (L₁) erst nach erfolgter Totalreflektion dieser Lichtanteile an einer innen liegenden Grenzfläche (15a, 15b) erhält und auf einen der optischen Achse (M) fernen Bereich (34) der Lichtemissionsfläche (19) leitet.

13. Gruppe von Linsenelementen (10) nach einem der vorangegangenen Ansprüche, **dadurch gekennzeichnet, dass** eine erstes größeres Linsenelement und ein zweites kleineres Linsenelement vorgesehen ist, die sich bei gleichem, maßstäblichem geometrischen Aufbau nur in der Größe unterscheiden.

14. Leuchte (40), umfassend wenigstens eine Lichtquelle (13), insbesondere wenigstens eine LED, und wenigstens ein Linsenelement (10) nach einem der vorangegangenen Ansprüche.

15. Leuchte nach Anspruch 14, **dadurch gekennzeichnet, dass** als Lichtquelle (13) wenigstens eine, insbesondere monochromes Licht emittierende LED vorgesehen ist.

## Claims

1. Lens element (10) for a light source (13), in particular for at least one LED, comprising a body (35) of light-conducting material, with a light introduction area (18), a light conduction section (36), and a light emission area (19), wherein the light introduction area has a first central middle section (31) close to an optical axis (M) of the body and a first rim section (32) surrounding the first middle section in a substantially annular manner, and wherein the light emission area has a second central middle section (33) close to the optical axis of the body, **characterised in that** the light emission area has a second rim section (34) surrounding the second middle section in a substantially annular manner, and that the light conduction section has boundary surfaces (15a, 15b, 16b, 16d), which conduct the portions of light (L₁) originating from the light source (13) and encountering the first middle section (31) to the second rim section (34) and has boundary surfaces (14a, 14d, 16a, 16c), which conduct the portions of light (L₂) originating from the light source and encountering the first rim section (32) to the second middle section (33).

2. Lens element according to claim 1, **characterised in that** the boundary surfaces comprise first boundary surfaces (15a, 15b) and second boundary surfaces (16b, 16d), wherein the first boundary surfaces (15a, 15b) conduct portions of light (L₁) originating from the light source (13) and encountering the first middle section (31) outwards as a consequence of total reflection in relation to the optical axis (M) and the second boundary surfaces (16b, 16d) conduct these portions of light (L₁") as a consequence of further total reflection or reflection, in particular as a consequence of a silvering of the second boundary surfaces, to the second rim section (34).

3. Lens element according to claim 1 or 2, **characterised in that** the boundary surfaces (14a, 14b, 14c, 14d, 15a, 15b, 16a, 16b, 16c, 16d) are formed such that a crossing of light beams occurs within the light conduction section (36).

4. Lens element according to one of the preceding claims, **characterised in that** the body (35) has a first cavity (11) on its side facing the light source (13) and a second cavity (12) on its side facing away from the light source.

5. Lens element according to claim 4, **characterised in that** the second cavity (12) is formed to be substantially triangular in cross-section and is delimited by flat lateral faces (15a, 15b).

6. Lens element according to claim 4 or 5, **characterised in that** the first cavity (11) has a big-top-like cross-section, which is formed by a pair of curved side walls (14a, 14d) and a pair of curved roof walls (14b, 14c).

7. Lens element according to claim 6, **characterised in that** the curved side walls (14a, 14d) and roof walls (14b, 14c) are connected to one another respectively via guide kinks.

8. Lens element according to one of the preceding claims, **characterised in that** the light conduction section (36) is formed substantially mirror-symmetrically in cross-section in relation to the optical axis (M).

9. Lens element according to one of the preceding claims, **characterised in that** the light conduction section (36) is formed substantially rotationally symmetrically in relation to the optical axis (M).

10. Lens element according to one of the preceding claims, **characterised in that** the light conduction section (36) has the smallest wall thickness in the area of the first middle section (31) and in the area of the second middle section (33), in particular close to the optical axis (M).

11. Lens element according to one of the preceding claims, **characterised in that** attachment receptacles (37a, 37b, 37c, 37d) for attachment elements (44a, 44b) such as screws are connected to the body (35) in one piece adhesively or cohesively.

12. Lens element (10) according to claim 1, comprising a body (35) of light-conducting material, with a light introduction area (18), a light conduction section (36), and a light emission area (19), wherein the light conduction section has a boundary surface (16a, 16b, 16c, 16d) facilitating reflection and lying externally in relation to an optical axis (M) of the body, **characterised in that** the boundary surface has a first section (16a, 16c) close to the light source (13) and a second section (16b, 16d) remote from the light source, wherein the first section (16a, 16c) conducts direct portions of light (L₂) originating from the light source to an area (33) of the light emission area (19) close to the optical axis (M) and wherein the second section (16b, 16d) of the boundary surface receives indirect portions of light (L₁) originating from the light source (13) only following completed total reflection of these portions of light on a boundary surface (15a, 15b) lying internally and conducts them to an area (34) of the light emission area (19) remote from the optical axis (M).

13. Group of lens elements (10) according to one of the preceding claims, **characterised in that** a first larger lens element and a second smaller lens element are provided, which with the same geometrical structure to scale differ only in size.

14. Light fixture (40), comprising at least one light source (13), in particular at least one LED, and at least one lens element (10) according to one of the preceding claims.

15. Light fixture according to claim 14, **characterised in that** at least one LED, in particular emitting monochrome light, is provided as a light source (13).

## Revendications

1. Elément de lentille (10) pour une source de lumière (13), en particulier pour au moins une DEL, comprenant un corps (35) en un matériau conducteur de lumière, avec une surface de guidage de lumière (18), une section de guidage de la lumière (36) et une surface émettrice de la lumière (19), la surface de guidage de la lumière présentant une première section médiane centrale (31) à proximité d'un axe optique (M) du corps et une première section de bord (32) entourant, essentiellement en forme d'anneau, la première section médiane centrale, et la surface émettrice de lumière présentant une deuxième section médiane centrale (33) à proximité de l'axe optique du corps, **caractérisé en ce que** la surface émettrice de lumière présente une deuxième section de bord (34) entourant, essentiellement en forme d'anneau, la deuxième section médiane centrale et **en ce que** la section de guidage de la lumière présente des surfaces de limitation (15a, 15b, 16b, 16d) qui conduisent des composants de la lumière (L₁) provenant de la source de lumière (13) et tombant sur la première section médiane centrale (31) vers la deuxième section de bord (34) et présentent des surfaces de limitation (14a, 14d, 16a, 16c) qui conduisent des composants de lumière (L₂) provenant de la source de lumière et tombant sur la première section de bord (32) vers la deuxième section centrale médiane (33).

2. Elément de lentille selon la revendication 1, **caractérisé en ce que** les surfaces de limitation comprennent les premières surfaces de limitation (15a, 15b) et les deuxièmes surfaces de limitation (16b, 16d), les premières surfaces de limitation (15a, 15b) conduisant vers l'extérieur des composants de la lumière (L₁) provenant de la source de lumière (13) et tombant sur la première section médiane centrale (31) à la suite de la réfection totale, par rapport à l'axe optique (M), et les deuxièmes surfaces de limitation (16b, 16d) conduisant ces composants de lumière (L1") suite à la réflexion ou à une autre réflexion totale, en particulier, par suite d'un réfléchissement des deuxièmes surfaces de limitation, vers la deuxième section de bord (34).

3. Elément de lentille selon la revendication 1 ou 2, **caractérisé en ce que** les surfaces de limitation (14a, 14b, 14c, 14d, 15a, 15b, 16a, 16b, 16c, 16d) sont conçues de telle sorte que des rayons de lumière se croisent au sein de la section de guidage de la lumière (36).

4. Elément de lentille selon l'une des précédentes revendications, **caractérisé en ce que** le corps (35) présente, sur son côté orienté vers la source de lumière (13), une première cavité (11) et sur son côté détourné de la source de lumière, une deuxième cavité (12).

5. Elément de lentille selon la revendication 4, **caractérisé en ce que** la deuxième cavité (12) est conçue en section transversale essentiellement en forme triangulaire et est limitée par des surfaces latérales planes (15a, 15b).

6. Elément de lentille selon la revendication 4 ou 5, **caractérisé en ce que** la première cavité (11) présente une section transversale de type chapiteau qui est formée d'une paire de parois latérales courbes (14a, 14d) et d'une paire de parois de toit courbes (14b, 14c).

7. Elément de lentille selon la revendication 6, **caractérisé en ce que** les parois latérales courbes (14a, 14d) et les parois de toit courbes (14b, 14c) sont reliées ensemble, à chaque fois, par le biais de points de pliage de direction.

8. Elément de lentille selon l'une des précédentes revendications, **caractérisé en ce que** la section de guidage de la lumière (36) est conçue essentiellement symétrique comme dans un miroir, en section transversale, par rapport à l'axe optique (M).

9. Elément de lentille selon l'une des précédentes revendications, **caractérisé en ce que** la section de guidage de la lumière (36) est conçue essentiellement à symétrie de révolution, par rapport à l'axe optique (M).

10. Elément de lentille selon l'une des précédentes revendications, **caractérisé en ce que** la section de guidage de lumière (36) présente dans la zone de la première section médiane (31) et dans la zone de la deuxième section médiane (33), en particulier à proximité de l'axe optique (M), l'épaisseur de paroi la plus fine.

11. Elément de lentille selon l'une des précédentes revendications, **caractérisé en ce que** des logements de fixation (37a, 37b, 37c, 37d) pour des éléments de fixation (44a, 44b), comme des vis, sont reliés au corps (35) en une seule pièce et en complémentarité de matière.

12. Elément de lentille (10) selon la revendication 1, comprenant un corps (35) en matériau conducteur de la lumière, avec une surface de guidage de la lumière (18), une section de guidage de lumière (36) et une surface émettrice de lumière (19), la section de guidage de la lumière présentant une surface de limitation (16a, 16b, 16c, 16d) placée à l'extérieur, par rapport à un axe optique (M) du corps, permettant la réflexion, **caractérisé en ce que** la surface de limitation présente une première section (16a, 16c) à proximité de la source de lumière (13) et une deuxième section (16b, 16d) éloignée de la source de lumière, la première section (16a, 16c) conduisant des composants de la lumière (L₂) directs provenant de la source de lumière sur une zone (33), à proximité de l'axe optique (M), de la surface émettrice de la lumière (19) et la deuxième section (16b, 16d) de la surface de limitation recevant des composants de la lumière (L₁) indirects provenant de la source de lumière (13), uniquement après réflexion totale de ces composants de la lumière au niveau d'une surface de limitation (15a, 15b) située à l'intérieur et conduisant sur une zone (34), éloignée de l'axe optique (M), de la surface émettrice de lumière (19).

13. Ensemble d'éléments de lentille (10) selon l'une des précédentes revendications, **caractérisé en ce qu'**il est prévu un premier élément de lentille plus grand et un deuxième élément de lentille plus petit, qui, en présence de même conception géométrique en terme d'échelle, se distinguent uniquement dans la taille.

14. Luminaire (40), comprenant au moins une source de lumière (13), en particulier au moins une DEL, et au moins un élément de lentille (10) selon l'une des précédentes revendications.

15. Luminaire selon la revendication 14, **caractérisé en ce qu'**il est prévu en tant que source de lumière (13) au moins une DEL émettant de la lumière, en particulier monochrome.
